# EUROPEAN PATENT SPECIFICATION

(11) **EP 0 420 381 B1**
(45) Date of publication and mention of the grant of the patent: **20.10.1993**
(21) Application number: 90304598.7
(22) Date of filing: 27.04.1990
(51) Int. Cl.: F16F 1/38

(54) **Slipper bushing assembly**
Schwingbüchsenaufbau
Assemblage élastique à doville

(30) Priority: 29.09.1989 US 416213
(43) Date of publication of application: 03.04.1991
(73) Proprietor: GENCORP INC., Akron Ohio 44313 (US)
(72) Inventor: Chakko, Mathew K., Wabash, Indiana 46992 (US)
(74) Representative: Stoner, Gerard Patrick

(56) References cited:
- US-A- 3 147 964
- US-A- 3 560 034
- US-A- 3 604 771
- US-A- 3 642 268

## Description

The present invention relates to slipper bushing assemblies. Slipper bushings are a special type of bushing used mainly in automobile suspensions, although they have other applications.

An ordinary bushing typically comprises inner and outer concentric metal sleeves having a rubber or other elastomeric, hollow, cylindrical body disposed between the two sleeves. In a typical bushing application the outer metal sleeve is joined to a movable member and the inner sleeve to a support element. The bushing is constructed so as to permit controlled movement between the joined parts.

There are other applications in which bushings are used where relative movement between the parts joined by the bushing is not only desirable but necessary. In such applications one bushing construction which is used is commonly referred to as a slipper bushing. One application of slipper bushings is in the upper and lower (both front and rear) control arms of automotive suspension systems.

### Prior Art

US-A-3604771 (disclosing features corresponding to the preamble of present Claim 1) describes a bushing in which an inner rigid steel tube has a rubber sleeve bonded around it, with outwardly flared ends, and an outer rigid steel tube has a moulded-on plastics liner which forms a slipping interface with the rubber sleeve. A lubricant is held in surface recesses of the rubber sleeve.

The present invention aims to provide a slipper bushing assembly having a novel construction in which lubricant is retained at the slipping interface.

According to the invention, we provide a slipper bushing assembly comprising:
a rigid, inner cylindrical member;
a concentric, hollow, cylindrical elastomeric member having ends with outward annular flanges, the inner surface of the elastomeric member being fixed on the outer surface of the inner member;
a rigid, concentric, hollow, cylindrical, polymeric outer member which is sealingly in engagement with the flanges of said elastomeric member, and the inner surface of which is in slidable relation against the outer surface of the elastomeric member;
a lubricant between the inner surface of the outer member and the outer surface of the elastomeric member, the flanges of the elastomeric member sealing the lubricated interface between the elastomeric member and the outer member,
characterised in that
the elastomeric member is force-fitted on the outer surface of the inner member;
the outer member has ends with annular recesses adapted to engage sealingly with the flanges of said elastomeric member; and
end caps are fixed at the ends of the inner member and have flange portions contacting against at least portions of the ends of the cylindrical elastomeric member.

Some optional features are explained in the dependent claims.

An embodiment of the invention is now described by way of example, with reference to the accompanying drawings in which:
Figure 1 is a sectional view showing a bushing assembly embodying the invention;
FIG. 2 is a sectional view showing the inner member of the bushing assembly and the end caps which cooperate to seal the structure;
FIG. 3 is a sectional view of the elastomeric member of the bushing assembly; and
FIG. 4 is a sectional view of the polymeric member of the assembly.

### Detailed Description

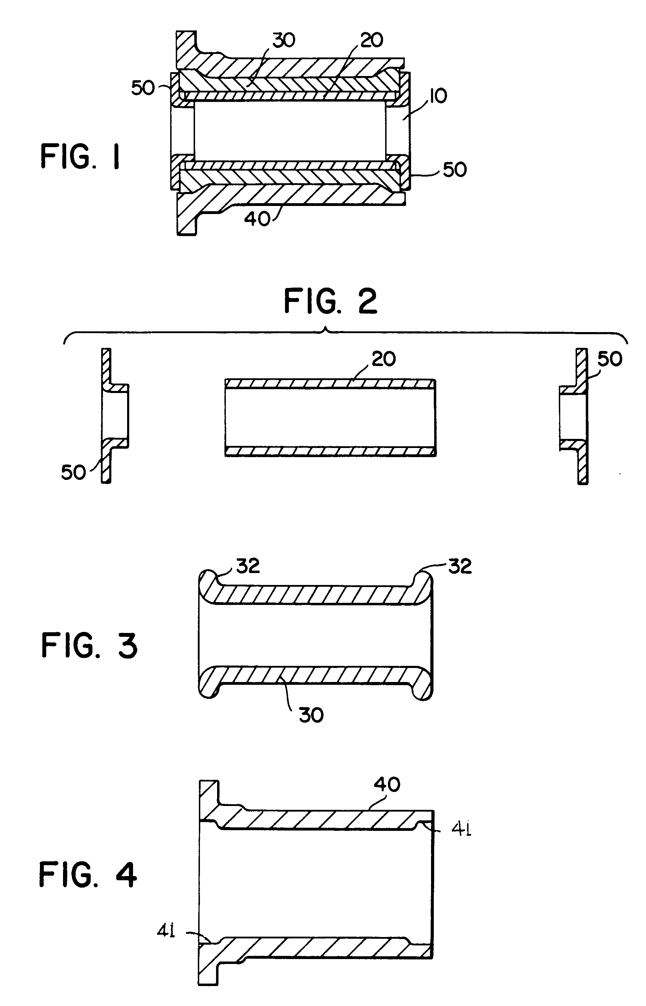

In Fig. 1, a bushing assembly embodying the invention is shown. The bushing assembly 10 is basically comprised of an inner member 20, an elastomeric member 30 and an outer polymeric member 40. End caps 50 are used at either end of the assembly to eliminate or substantially reduce contamination to the interface 60 between the elastomer and the polymer members.

As shown in FIG. 2 the inner member 20 is of an internal diameter chosen to facilitate mounting on the control arm of an automotive suspension system, not shown. In some applications inner member 20 may be solid, i.e., rod-like rather than hollow. While the inner member 20 is commonly made of a metal such as steel, it may also be fabricated from an engineering plastic.

The internal diameter of the elastomer member 30 as shown in FIG. 3 is somewhat less than the outer diameter of the rigid inner member 20. When in an assembled condition, this ensures that the fit between the inner member 20 and the elastomeric member 30 is what is commonly referred to as force-fitted. In a typical application, the outside diameter of the inner metal might be about 21 mm. and the inner diameter of the elastomeric member might be on the order of 17 mm. In a typical application, the wall thickness of the elastomeric member 30, prior to assembly, is on the order of 5 mm.

In an assembled condition the elastomeric member 30 may have a slightly smaller wall thickness. The overall length of the elastomeric insert prior to assembly is somewhat less than its length in an assembled condition. In a typical application the preassembled length was about 62 mm. and, when assembled, the length was somewhat less; about 61 mm.

The outer polymeric member is a rigid tube 40 of e.g. nylon, polyester or polypropylene, which may be reinforced. In this example, glass-reinforced nylon was used. The member has a smooth inner surface which fits closely against the outer, cylindrical surface of the elastomeric member 30. At its ends its inner diameter increases to form annular recesses 41.

It is to be noted that the ends of the elastomeric member have radially outward flanges 32 extending right around them. The flanged ends cooperate with the recesses 41 in the polymeric member in a manner such that, in particular when end caps 50 are applied, an effective seal is established to keep out materials which might adversely affect the lubricated inner face between the elastomeric member 30 and the polymeric member 40. The specific configuration of the elastomeric insert is not critical as long as it forms an effective seal.

The end caps 50 each consist of a circular collar which is a press-fit into the end of the inner member 20, and an integral circular radial flange which when assembled extends out across the end 32 of the elastomeric member 30, nearly to the inner edge of the outer cylinder 40.

An important aspect of the bushing resides in the selection of a proper lubricant for the interface between the polymeric outer member and the elastomeric member.

There is no known method of predicting the coefficient of friction without measurement. It is a surface phenomenon and can only be determined by test.

A series of experiments were run in which the rubber of the insert was varied as to hardness. The rubbers used were natural rubber compounds of the type known for use in such bushings. In addition, a variety of lubricants were tried. The results of these tests are set out below.

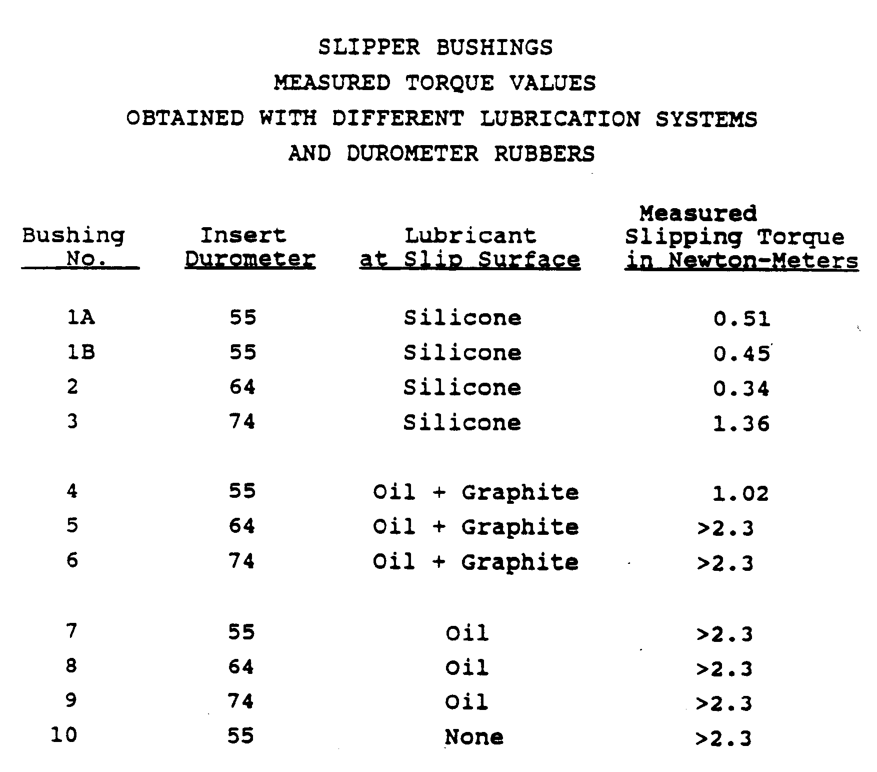

It can be seen that a very low slipping torque on the order of 0.5 Newton-meters is only available with a silicone lubricant. The oil and graphite and oil alone all result in slipping torques that are higher, but which may be useful in some applications.

It is apparent from these experiments that the durometer of the rubber has an effect on slipping torque in that a lower durometer rubber gives a lower slipping torque than a higher durometer rubber, all other things being equal.

It is apparent from the foregoing description that the slipper bushing described above presents, in the form of a polymer elastomer interface, improvements over those currently used. In addition to the reduced breakaway torque and the sealed, rotational interface encompassed in the construction, the bushing of the invention is relatively easy to fabricate.

## Claims

1. A slipper bushing assembly comprising:
a rigid, inner cylindrical member (20);
a concentric, hollow, cylindrical elastomeric member (30) having ends with outward annular flanges (32), the inner surface of the elastomeric member (30) being fixed on the outer surface of the inner member (20);
a rigid, concentric, hollow, cylindrical, polymeric outer member (40) which is sealingly in engagement with the flanges (32) of said elastomeric member (30), and the inner surface of which is in slidable relation against the outer surface of the elastomeric member (30);
a lubricant between the inner surface of the outer member (40) and the outer surface of the elastomeric member (30), the flanges (32) of the elastomeric member (30) sealing the lubricated interface between the elastomeric member (30) and the outer member (40),
characterised in that
the elastomeric member (30) is force-fitted on the outer surface of the inner member (20);
the outer member (40) has ends with annular recesses (41) adapted to engage sealingly with the flanges (32) of said elastomeric member (30); and
end caps (50) are fixed at the ends of the inner member (20) and have flange portions contacting against at least portions of the ends of the cylindrical elastomeric member (30).

2. The bushing assembly of claim 1 wherein the inner member (20) is metal.

3. The bushing assembly of claim 1 wherein the inner member (20) is of plastics material.

4. The bushing assembly of any preceding claim wherein the elastomeric member (30) is rubber.

5. The bushing assembly of any preceding claim wherein the slipping torque is less than 0.56 Newton-meters.

6. The bushing assembly of any preceding claim wherein the inner cylinder member (20) is hollow.

7. The bushing assembly of any preceding claim wherein the lubricant is a silicone lubricant.

## Patentansprüche

1. Gleitbüchsen- bzw. Gleitlageranordnung, umfassend:
ein starres, inneres zylindrisches Element (20);
ein konzentrisches, hohles, zylindrisches Elastomerelement (30), das Enden mit äußeren ringförmigen Flanschen (32) aufweist, wobei die innere Oberfläche des Elastomerelements (30) an der äußeren Oberfläche des inneren Elements (20) befestigt ist;
ein starres, konzentrisches, hohles, zylindrisches Polymeraußenelement (40), das sich in dichtendem Eingriff mit den Flanschen (32) des genannten Elastomerelements (30) befindet und dessen innere Oberfläche sich in gleitender Beziehung gegen die äußere Oberfläche des Elastomerelements (30) befindet;
ein Schmiermittel zwischen der inneren Oberfläche des äußeren Elements (40) und der äußeren Oberfläche des Elastomerelements (30), wobei die Flansche (32) des Elastomerelements (30) die geschmierte Grenzfläche zwischen dem Elastomerelement (30) und dem Außenelement (40) abdichten, dadurch gekennzeichnet, daß
das Elastomerelement (30) im Preßsitz an der äußeren Oberfläche des inneren Elements (20) angebracht ist;
das äußere Element (40) Enden mit ringförmigen Ausnehmungen (41) aufweist, die so ausgebildet sind, daß sie sich dichtend in Eingriff mit den Flanschen (32) des genannten Elastomerelements (30) befinden; und
Endkappen (50) an den Enden des inneren Elements (20) befestigt sind und Flanschabschnitte aufweisen, die zumindest gegen Abschnitte der Enden des zylindrischen Elastomerelements (30) anliegen.

2. Büchsen- bzw. Lageranordnung nach Anspruch 1, worin das innere Element (20) aus Metall besteht.

3. Büchsen- bzw. Lageranordnung nach Anspruch 1, worin das innere Element (20) aus Kunststoffmaterial besteht.

4. Büchsen- bzw. Lageranordnung nach einem der vorhergehenden Ansprüche, worin das Elastomerelement (30) Gummi ist.

5. Büchsen- bzw. Lageranordnung nach einem der vorhergehenden Ansprüche, worin das Gleitdrehmoment weniger als 0,56 Newton-Meter beträgt.

6. Büchsen- bzw. Lageranordnung nach einem der vorhergehenden Ansprüche, worin das innere Zylinderelement (20) hohl ist.

7. Büchsen- bzw. Lageranordnung nach einem der vorhergehenden Ansprüche, worin das Schmiermittel ein Silikonschmiermittel ist.

## Revendications

1. Assemblage plastique à douille comprenant:
un membre cylindrique intérieur, rigide (20);
un membre élastomèrique cylindrique, creux, concentrique, (30) ayant des extrémités avec des brides annulaires extérieures (32), la surface intérieure du membre élastomérique (30) étant fixé sur la surface extérieure du membre intérieur (20);
un membre extérieur polymèrique, cylindrique, creux, concentnque, rigide (40) qui est en engagement de façon étanche avec les brides (32) dudit membre élastomérique (30), et dont la surface intérieure est en relation élastique contre la surface extérieure du membre élastomérique (30);
un lubrifiant entre la surface intérieure du membre extérieur (40) et la surface extérieure du membre élastomérique (30), les brides (32) du membre élastomèrique (30) rendant étanche l'interface lubrifiée entre le membre élastomérique (30) et le membre extérieur (40),
caractérisé en ce que
le membre élastomérique (30) est adapté en force sur la surface extérieure du membre intérieur (20);
le membre extérieur (40) a des extrémités avec des rainures annulaires (41) adaptées pour s'engager de façon étanche avec les brides (32) dudit membre élastomérique (30); et
des chapeaux d'extrémité (50) sont fixés sur les extrémités du membre interne (20) et ont des parties débridées en contact contre au moins des parties des extrémités du membre élastomérique cylindrique (30).

2. Assemblage à douille selon la revendication 1, dans lequel le membre interne (20) est métallique.

3. Assemblage à douille selon la revendication 1, dans lequel le membre interne (20) est en matériau plastique.

4. Assemblage à douille selon l'une quelconque des revendications précédentes, dans lequel le membre élastomérique (30) est du caoutchouc.

5. Assemblage à douille selon l'une quelconque des revendications précédentes dans lequel la force de torsion élastique est inférieure à 0,56 Newton-mètres.

6. Assemblage à douille selon l'une quelconque des revendications précédentes dans lequel le membre cylindrique intérieur (20) est creux.

7. Assemblage à douille selon l'une quelconque des revendications précédentes dans lequel le lubrifiant est un lubrifiant silicone.
